# EUROPÄISCHE PATENTSCHRIFT

(11) **EP 0 774 796 B1**
(45) Veröffentlichungstag und Bekanntmachung des Hinweises auf die Patenterteilung: **12.09.2001**
(21) Anmeldenummer: 96117794.6
(22) Anmeldetag: 07.11.1996
(51) Int. Cl.: H01P 1/08, G01F 23/284

(54) **Mikrowellenfenster**
Microwave window
Fenêtre à microondes

(30) Priorität: 15.11.1995 DE 19542525
(43) Veröffentlichungstag der Anmeldung: 21.05.1997
(73) Patentinhaber: KROHNE MESSTECHNIK GMBH & CO. KG, D-47058 Duisburg (DE)
(72) Erfinder: Lübbers, Wilhelm, 47259 Duisburg (DE)
(74) Vertreter: Patentanwälte Gesthuysen, von Rohr, Weidener, Häckel

(56) Entgegenhaltungen:
- EP-A- 0 373 054
- DE-A- 1 491 373
- FR-A- 2 478 869
- GB-A- 821 772
- GB-A- 908 808
- GB-A- 2 082 844
- US-A- 4 688 009
- US-A- 5 115 218

## Beschreibung

Die Erfindung betrifft ein Mikrowellenfenster zur räumlichen Trennung und mikrowellenmäßigen Verbindung eines äußeren Mikrowellenleiters von bzw. mit einem inneren Mikrowellenleiter, mit einer mikrowellendurchlässigen gläsernen oder keramischen Durchlaßscheibe und mit einem der Befestigung der Durchlaßscheibe dienenden metallischen Befestigungsmittel. Die Erfindung betrifft ferner ein Mikrowellenfenster zur räumlichen Trennung und mikrowellenmäßigen Verbindung eines äußeren Mikrowellenleiters von bzw. mit einem inneren Mikrowellenleiter, mit einer mikrowellendurchlässigen gläsernen oder keramischen Durchlaßscheibe, wobei der äußere und der innere Mikrowellenleiter auf den beiden Seiten der Wand eines Behälters vorgesehen sind.

Derartige Mikrowellenfenster sind aus der EP 0 373 054 A sowie aus der US 5,136,272 bekannt. Darüber hinaus sind derartige Mikrowellenfenster auch aus der DE 41 00 922 C und der DE 43 36 494 A bekannt. Derartige Mikrowellenfenster dienen zur Trennung einer Mikrowellensendeeinrichtung von einem, in der Regel in einem Behälter befindlichen Target, in der Regel einem flüssigen oder festen Medium. Derartige Anordnungen werden insbesondere für Füllstandsmessungen nach dem Radarprinzip in industriellen Anlagen verwendet. Für derartige industrielle Füllstandsmeßsysteme werden in der Regel spezifische Anforderungen an die mechanischen Teile gestellt, die mit dem Medium im Behälter bzw. der zugehörigen Atmosphäre in Berührung kommen können. In einem solchen Behälter können Unterdrücke oder hohe Überdrücke, explosive Atmosphären, sehr hohe oder sehr niedrige Temperaturen und agressive und korrosive Medien vorhanden sein. Ein Mikrowellenfenster, von dem die Erfindung ausgeht, dient dazu, die Mikrowellensendeeinrichtung mit insbesondere ihren empfindlichen elektronischen Bauteilen vor den Einflüssen der Verhältnisse im das Medium speichernden Behälter zu schützen.

Bei den aus dem Stand der Technik bekannten Mikrowellenfenstern ist die mikrowellendurchlässige Durchlaßscheibe unter Verwendung geeigneter Dichtmittel zwischen dem Befestigungsmittel aus Metall und beispielsweise der Behälterwand eingespannt, so daß ein dichter, druck- und temperaturfester Übergang der Mikrowellenstrahlung in den Behälter ermöglicht ist. Den aus dem Stand der Technik bekannten Mikrowellenfenstern ist dabei gemein, daß sie bei der Befestigung kräftemäßig beansprucht werden.

Aus der DE 1 491 373 A ist ebenfalls ein gattungsgemäßes Mikrowellenfenster bekannt. Dieses Mikrowellenfenster weist eine mikrowellendurchlässige Durchlaßscheibe aus Glas auf, die in ein Befestigungsmittel eingeschmolzen ist. Ferner ist aus der US 4,688,009 ein Mikrowellenfenster mit einer mikrowellendurchlässigen Durchlaßscheibe aus Keramik bekannt, die in ein Befestigungsmittel eingesintert ist. Bei diesen bekannten Mikrowellenfenstern ist jedoch problematisch, daß deren Konstruktionen relativ aufwendig sind und daß sich damit keine Verhältnisse schaffen lassen, mit denen ein störungsfreier Durchtritt der Mikrowellenstrahlung durch das Mikrowellenfenster gewährleistet werden kann.

Der Erfindung liegt somit die Aufgabe zugrunde, die Konstruktion eines Mikrowellenfensters zu vereinfachen und gleichzeitig zu gewährleisten, daß der Durchtritt der Mikrowellenstrahlung durch das Mikrowellenfenster möglichst störungsfrei gewährleistet ist.

Die zuvor aufgezeigte Aufgabe ist erfindungsgemäß dadurch gelöst, daß der Außendurchmesser der Durchlaßscheibe dem Innendurchmesser der das Mikrowellenfenster aufnehmenden Mikrowellenleiter entspricht und daß das Befestigungsmittel ringförmig ausgeführt und die gläserne Durchlaßscheibe in das Befestigungsmittel eingeschmolzen oder die keramische Durchlaßscheibe in das Befestigungsmittel eingesintert ist. Sind der äußere und der innere Mikrowellenleiter auf den beiden Seiten der Wand eines Behälters vorgesehen, so ist die weiter oben aufgezeigte Aufgabe erfindungsgemäß dadurch gelöst, daß der Außendurchmesser der Durchlaßscheibe dem Innendurchmesser der das Mikrowellenfenster aufnehmenden Mikrowellenleiter entspricht und daß die gläserne Durchlaßscheibe in die Wand eingeschmolzen oder die keramische Durchlaßscheibe in die Wand eingesintert ist.

Um eine optimale Durchlässigkeit der Durchlaßscheibe für Mikrowellenstrahlung zu gewährleisten, ist das erfindungsgemäße Mikrowellenfenster derart ausgestaltet, daß der Außendurchmesser der Durchlaßscheibe dem Innendurchmesser eines das Mikrowellenfenster aufnehmenden Mikrowellenleiters entspricht. Eine derartige Ausgestaltung ist bei den aus dem Stand der Technik bekannten Mikrowellenfenstern nicht möglich, da bei den bekannten Mikrowellenfenstern in einem solchen Fall die mechanische, formschlüssige Befestigung des Mikrowellenfensters nicht mehr zu gewährleisten ist. Für die Durchlässigkeit des Mikrowellenfensters für die Mikrowellenstrahlung ist eine derartige Ausgestaltung vor allem deshalb vorteilhaft, da die Mikrowellenstrahlung somit einen Mikrowellenleiter mit kontinuierlichem Durchmesser "sieht" und daher keine Reflektionen an Querschnittsänderungen auftreten.

Eine weitere Erhöhung der Durchlässigkeit des Mikrowellenfensters für Mikrowellenstrahlung ist dadurch gewährleistet, daß zur Anpassung des Wellenwiderstandes an mindestens einer Seite der Durchlaßscheibe aus dielektrischem Material bestehende Anpassungskörper angebracht sind. Bei geeigneter Wahl von Form und Material dieser Anpassungskörper erhöht sich wunschgemäß die Durchlässigkeit des Mikrowellenfensters für die Mikrowellenstrahlung.

Alternativ zur Anbringung von Anpassungskörpern erfährt das erfindungsgemäße Mikrowellenfenster eine bevorzugte Ausgestaltung dadurch, daß zur Anpassung des Wellenwiderstandes die Durchlaßscheibe als Anpassungskörper ausgebildet ist. Durch diese Maßnahme entfallen die Übergänge zwischen den Anpassungskörpern und der Durchlaßscheibe und somit eine weitere Möglichkeit für Reflektionen der Mikrowellenstrahlung im Bereich des Mikrowellenfensters.

Ein plan ausgeführtes Mikrowellenfenster wird im Hinblick auf seine Durchlässigkeit für die Mikrowellenstrahlung nochmals dadurch verbessert, daß die Dicke der Durchlaßscheibe ein ganzzahliges Vielfaches der Wellenlänge der Mikrowellen beträgt. Bei einer derartigen Ausgestaltung der Durchlaßscheibe ist selbstverständlich die Dielektrizitätszahl des Materials der Durchlaßscheibe und die Ausbreitungsgeschwindigkeit der Mikrowellenstrahlung innerhalb des Mikrowellenleiter zu berücksichtigen.

Im einzelnen gibt es nun eine Vielzahl von Möglichkeiten, das erfindungsgemäße Mikrowellenfenster auszugestalten und weiterzubilden. Dazu wird verwiesen einerseits auf die dem Patentanspruch 1 und/oder dem Patentanspruch 2 nachgeordneten Patentansprüche, andererseits auf die Beschreibung von bevorzugten Ausführungsbeispielen in Verbindung mit der Zeichnung. In der Zeichnung zeigt
- Fig. 1: im Schnitt die Anordnung eines Mikrowellenfensters gemäß einem ersten bevorzugten Ausführungsbeispiel der Erfindung in Verbindung mit einem Mikrowellenleiter und einem Behälter,
- Fig. 2: im Schnitt die Anordnung eines Mikrowellenfensters gemäß einem zweiten bevorzugten Ausführungsbeispiel der Erfindung in Verbindung mit einem Mikrowellenleiter und einem Behälter,
- Fig. 3: im Schnitt die Anordnung eines Mikrowellenfensters gemäß einem dritten bevorzugten Ausführungsbeispiel der Erfindung in Verbindung mit einem Mikrowellenleiter und einem Behälter,
- Fig. 4: im Schnitt die Anordnung eines Mikrowellenfensters gemäß einem vierten bevorzugten Ausführungsbeispiel der Erfindung in Verbindung mit einem Mikrowellenleiter und einem Behälter und
- Fig. 5: im Schnitt die Anordnung eines Mikrowellenfensters gemäß einem fünften bevorzugten Ausführungsbeispiel der Erfindung in Verbindung mit einem Mikrowellenleiter und einem Behälter.

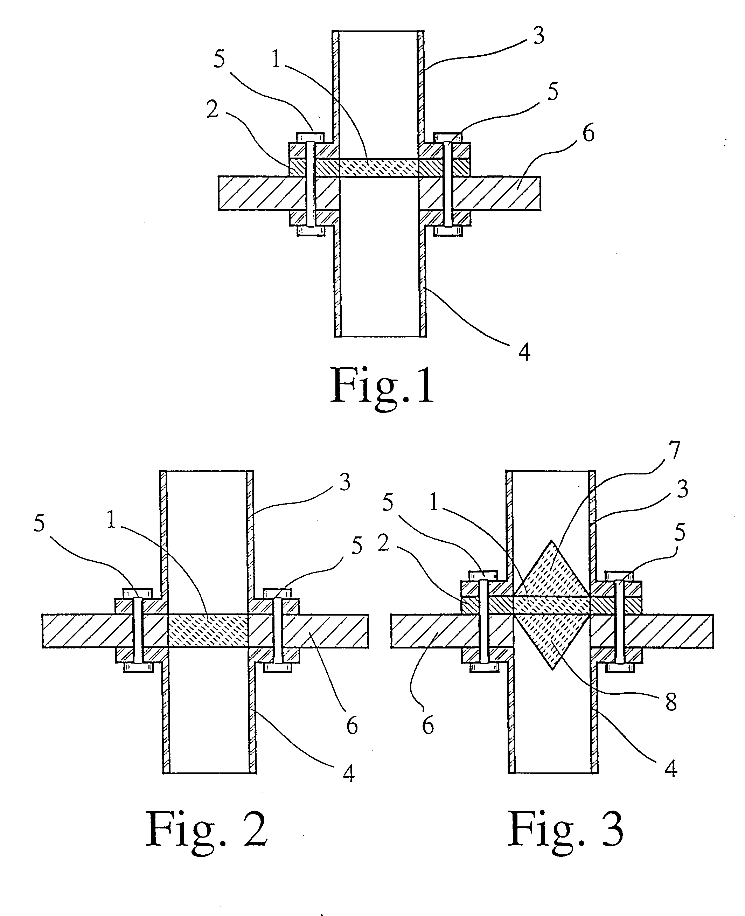

Die Zeichnung zeigt in Fig. 1 ein Mikrowellenfenster mit einer mikrowellendurchlässigen Durchlaßscheibe 1 und mit einem der Befestigung der Durchlaßscheibe 1 dienenden Befestigungsmittel 2, hier einem Befestigungsring, aus Metall. Die hier aus Glas bestehende Durchlaßscheibe 1 ist in das Befestigungsmittel 2 eingeschmolzen. Das Befestigungsmittel 2 ist zusammen mit einem äußeren Mikrowellenleiter 3 und einem inneren Mikrowellenleiter 4 über mehrere Verbindungselemente 5 mit der Wand 6 eines ein zu überwachendes Medium aufnehmenden, nur ausschnittsweise dargestellten Behälters verbunden.

In Fig. 1 ist deutlich zu erkennen, daß der Außendurchmesser der Durchlaßscheibe 1 dem Innendurchmesser des äußeren Mikrowellenleiters 3 und des von dem äußeren Mikrowellenleiter 3 durch das Mikrowellenfenster getrennten inneren Mikrowellenleiter 4 entspricht.

In Fig. 2 ist ein Mikrowellenfenster gemäß einem zweiten bevorzugten Ausführungsbeispiel der Erfindung dargestellt, bei dem das Befestigungsmittel einstückig mit der Wand 6 des das Medium aufnehmenden Behälters ausgebildet ist. Die Durchlaßscheibe 1, die hier wiederum aus Glas besteht, ist also unmittelbar in die Wand 6 eingeschmolzen. Wie man in Fig. 2 erkennen kann, ist somit gewährleistet, daß die Wand des Mikrowellenleiters nunmehr nur noch durch zwei statt, wie in Fig. 1, durch drei Übergänge unterbrochen ist. Da jeder Übergang in der Wand des Mikrowellenleiters Reflektionen des Mikrowellensignals verursacht, ist somit eine höhere Durchlässigkeit des Mikrowellenfensters für die Mikrowellenstrahlung gewährleistet.

Bei dem in Fig. 3 der Zeichnung dargestellten Mikrowellenfenster gemäß einem dritten bevorzugten Ausführungsbeispiel der Erfindung ist auf beiden Seiten der Durchlaßscheibe 1 jeweils ein aus dielektrischem Material bestehender Anpassungskörper 7, 8 angeordnet. Diese Anpassungskörper 7, 8 dienen der Anpassung des Wellenwiderstandes des Mikrowellenfensters an den Wellenwiderstand des äußeren Mikrowellenleiters 3 bzw. des inneren Mikrowellenleiters 4.

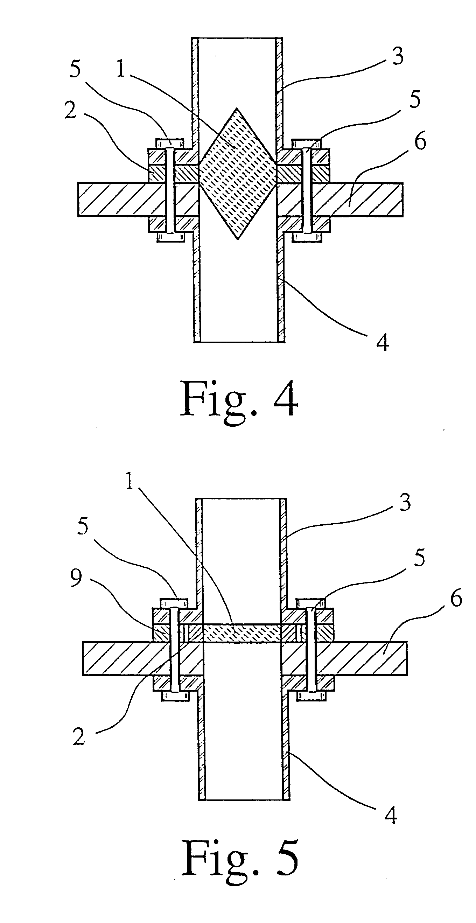

Eine derartige Anpassung des Wellenwiderstandes kann alternativ zu dem in Fig. 3 dargestellten Ausführungsbeispiel auch dadurch gewährleistet sein, daß, wie in dem in Fig. 4 dargestellten Ausführungsbeispiel die Durchlaßscheibe 1 selbst als Anpassungskörper ausgebildet ist.

Fig. 5 der Zeichnung zeigt schließlich ein fünftes bevorzugtes Ausführungsbeispiel, bei dem zwischen dem äußeren Mikrowellenleiter 3 und der Wand 6 des Behälters ein Metallring 9 derart angeordnet ist, daß die spannungsfreie Anbringung des Befestigungsmittels 2 zwischen dem äußeren Mikrowellenleiter 3 und der Wand 6 des Behälters gewährleistet ist. Dies wird dadurch erreicht, daß die Dicke des Metallringes 9 geringfügig größer ist als die Dicke des Befestigungsmittels 2.

Für alle in den Figuren dargestellten planaren Durchlaßscheiben 1 gilt, daß diese hinsichtlich ihrer Dicke an die Mikowellenstrahlung angepaßt sind.

## Patentansprüche

1. Mikrowellenfenster zur räumlichen Trennung und mikrowellenmäßigen Verbindung eines äußeren Mikrowellenleiters (3) von bzw. mit einem inneren Mikrowellenleiter (4), mit einer mikrowellendurchlässigen gläsernen oder keramischen Durchlaßscheibe (1) und mit einem der Befestigung der Durchlaßscheibe (1) dienenden metallischen Befestigungsmittel (2), **dadurch gekennzeichnet, daß** der Außendurchmesser der Durchlaßscheibe (1) dem Innendurchmesser der das Mikrowellenfenster aufnehmenden Mikrowellenleiter (3, 4) entspricht und daß das Befestigungsmittel (2) ringförmig ausgeführt und die gläserne Durchlaßscheibe (1) in das Befestigungsmittel (2) eingeschmolzen oder die keramische Durchlaßscheibe (1) in das Befestigungsmittel (2) eingesintert ist.

2. Mikrowellenfenster zur räumlichen Trennung und mikrowellenmäßigen Verbindung eines äußeren Mikrowellenleiters (3) von bzw. mit einem inneren Mikrowellenleiter (4), mit einer mikrowellendurchlässigen gläsernen oder keramischen Durchlaßscheibe (1), wobei der äußere und der innere Mikrowellenleiter (3, 4) auf den beiden Seiten der Wand (6) eines Behälters vorgesehen sind, **dadurch gekennzeichnet, daß** der Außendurchmesser der Durchlaßscheibe (1) dem Innendurchmesser der das Mikrowellenfenster aufnehmenden Mikrowellenleiter (3, 4) entspricht und daß die gläserne Durchlaßscheibe (1) in die Wand (6) eingeschmolzen oder die keramische Durchlaßscheibe (1) in die Wand (6) eingesintert ist.

3. Mikrowellenfenster nach Anspruch 1 oder 2, **dadurch gekennzeichnet, daß** die Dicke der Durchlaßscheibe (1) ein ganzzahliges Vielfaches der Wellenlänge der Mikrowellen beträgt.

4. Mikrowellenfenster nach einem der Ansprüche 1 bis 3, **dadurch gekennzeichnet, daß** zur Anpassung des Wellenwiderstandes der Durchlaßscheibe (1) an den Wellenwiderstand der Mikrowellenleiter (3, 4) an mindestens einer Seite der Durchlaßscheibe (1) aus dielektrischem Material bestehende Anpassungskörper (7, 8) vorgesehen sind.

5. Mikrowellenfenster nach Anspruch 4, **dadurch gekennzeichnet, daß** die Durchlaßscheibe (1) und der Anpassungskörper bzw. die Anpassungskörper (7, 8) einstückig ausgeführt sind.

6. Mikrowellenfenster nach einem der Ansprüche 1 und 3 bis 5, **dadurch gekennzeichnet, daß** ein das Befestigungsmittel (2) umgebender Metallring (9) vorgesehen und die Dicke des Metallringes (9) geringfügig größer als die Dicke des Befestigungsmittels (2) ist.

## Claims

1. Microwave window for spatial separation and for a microwave connection of an outer microwave conductor (3) from and/or with an inner microwave conductor (4), said microwave window having a transparent disk (1) made of glass or ceramic that lets microwaves through and having a metallic means of attachment (2) serving the purpose of attaching the transparent disk (1), **characterized in that** the outer diameter of the transparent disk (1) corresponds to the inner diameter of the microwave conductor (3, 4) incorporating the microwave window and that the means of attachment (2) is formed as a ring and the glass transparent disk (1) is melted into the means of attachment (2) or the ceramic transparent disk (1) is sintered into the means of attachment (2).

2. Microwave window for the spatial separation and for a microwave connection of an outside microwave conductor (3) from and/or with an inner microwave conductor (4), said microwave window having a transparent disk (1) made of glass or ceramic that lets microwaves through, wherein the outer and inner microwave conductors (3, 4) are provided on both sides of a wall (6) of a container, **characterized in that** the outer diameter of the transparent disk (1) corresponds to the inner diameter of the microwave conductor (3, 4) incorporating the microwave window and that the glass transparent disk (1) is melted into the means of attachment (2) or the ceramic transparent disk (1) is sintered into the means of attachment (2).

3. Microwave window according to claim 1 or 2, **characterized in that** the thickness of the transparent disk (1) is an integral multiple of the wavelength of the microwaves.

4. Microwave window according to any one of claims 1 to 3, **characterized in that** a matching element (7, 8) made of a dielectric material is provided on at least one side of the transparent disk (1) for the adaptation of wave resistance of the transparent disk (1) on the wave resistance of the microwave conductor (3, 4).

5. Microwave window according to claim 4, **characterized in that** the transparent disk (1) and the matching element or matching elements (7, 8) are designed as one piece.

6. Microwave window according to any one of claims 1 and 3 to 5, **characterized in that** a metal ring (9) is provided around the means of attachment (2) and the thickness of the metal ring (9) is slightly thicker than the thickness of the means of attachment (2).

## Revendications

1. Fenêtre à micro-ondes pour la séparation spatiale et la liaison micro-ondes d'un conducteur externe de micro-ondes (3) avec un conducteur interne de micro-ondes (4), avec une plaque en verre ou en céramique (1) laissant passer les micro-ondes et avec un moyen de fixation métallique (2) servant à la fixation de la plaque (1), **caractérisé en ce que** le diamètre extérieur de la plaque (1) correspond au diamètre intérieur du conducteur de micro-ondes (3, 4) recevant la fenêtre à micro-ondes, que le moyen de fixation (2) est en forme d'anneau et que la plaque en verre (1) est coulée dans le moyen de fixation (2) ou la plaque en céramique (1) est encastrée dans le moyen de fixation (2).

2. Fenêtre à micro-ondes pour la séparation spatiale et la liaison micro-ondes d'un conducteur externe de micro-ondes (3) avec un conducteur interne de micro-ondes (4), avec une plaque en verre ou en céramique (1), le conducteur externe et le conducteur interne de micro-ondes (3,4) étant prévus sur les deux côtés de la paroi (6) d'un bac, **caractérisé en ce que** le diamètre extérieur de la plaque (1) correspond au diamètre intérieur des conducteurs de micro-ondes (3,4) recevant la fenêtre à micro-ondes et que la plaque en verre (1) est coulée dans la paroi (6) ou la plaque en céramique (1) est encastrée dans la paroi (6).

3. Fenêtre à micro-ondes selon la revendication 1 ou 2, **caractérisée en ce que** l'épaisseur de la plaque (1) équivaut de nombreuses fois la longueur d'ondes des micro-ondes.

4. Fenêtre à micro-ondes selon une des revendications 1 à 3, **caractérisée en ce que,** pour l'adaptation de la résistance aux ondes de la plaque (1) à la résistance aux ondes du conducteur à micro-ondes (3,4), des adaptateurs (7,8) en matière diélectrique sont prévus au moins d'un côté de la plaque (1).

5. Fenêtre à micro-ondes selon la revendication 4, **caractérisée en ce que** la plaque (1) et l'adaptateur ou les adaptateurs (7,8) forment une seule pièce.

6. Fenêtre à micro-ondes selon une des revendications 1 et 3 à 5, **caractérisée en ce qu'**un anneau métallique (9) entourant le moyen de fixation (2) est prévu et que l'épaisseur de l'anneau métallique (9) est légèrement plus importante que celle du moyen de fixation (2).
